# EUROPEAN PATENT APPLICATION

(11) **EP 1 335 304 A1**
(43) Date of publication of application: **13.08.2003**
(21) Application number: 02250945.9
(22) Date of filing: 12.02.2002
(51) Int. Cl.: G06F 17/30

(54) **Digital information annotation and presentation system and method**

(71) Applicant: Weng, Jen-Hwang, Jungli City, Taoyuan 320 (TW)
(72) Inventor: Weng, Jen-Hwang, Jungli City, Taoyuan 320 (TW)
(74) Representative: Garratt, Peter Douglas

(57) **Abstract**

A server for online annotation of web page contents includes at least a central processing unit, a communication interface for connecting a communication link, a memory having further a digitized article content and an annotation content, and an annotation broadcasting mechanism. The article content may be displayed on an article web page window in a container at a user end through the communication interface and communication link for users reading. The annotation content includes at least an annotation event trace which may be loaded into the article web page window through the communication link and linked to an intent annotation web page object in the article web page. When the annotation event trace is the intent guide reading web page object, required annotation actions are located in the container or event traces composed of all annotation event related information triggered in the article web page. The annotation broadcasting mechanism, loaded through the communication link for broadcasting annotation content, includes at least an event trigger mechanism for searching, retrieving, or triggering the memory annotation event traces that link to the intent annotation web page object. The event triggering mechanism further includes function to continue, pause or resume broadcasting of the annotation event traces.

## Description

### FIELD OF THE INVENTION

The present invention relates to an information guide reading system and method and particularly to a digital information guide reading system and method.

### BACKGROUND OF THE INVENTION

The rising of the Internet has accelerated information revolution. The availability of broadband network further ushers the arrival of "knowledge economic age". As the broadband network can transmit huge amount of dynamic multimedia information, and hardware for reading multimedia information also are gradually mature, to publish dynamic information on networks becomes possible and practical now.

Books and magazines that are published by traditional publishers generally have plane printing contents including texts and pictures. The medium being used is paper. Distribution channels are bookstores. Some publishers try to augment the contents by including some video and audio materials. They are mainly to explain the content of the plane printings. Due to carrier natures. they must rely on other media such as audio or video tapes to accomplish the goals. Readers not only have to visit bookstores to search the required books but also have to cover many different carrier media while reading. It is troublesome, but unavoidable. Now the broadband network is a trend with growing acceptance. Transmission of multimedia video and audio contents is no longer a problem. And hardware technologies for browsing multimedia contents are also well developed. Hence if publishing contents can be digitized in the format of web page contents, and networks are used as publishing channels, the web pages may contain texts, pictures and multimedia video and audio contents, adding the powerful transmission capability of networks to reach anywhere easily, readers can conveniently procure required publishing contents and read online. All the foregoing problems and troubles that bother publish industry and readers can be resolved effectively.

As discussed above, publishing of plane medium sometimes has to augment with video and audio materials for guide reading purposes. Those guide reading contents generally are focused on the plane contents to serve targeted readers, thus do not have many variations. They are mostly plain speaking or are augmented with video images to meet description or explanation purposes. However when utilizing web pages as publishing carriers. the guide reading targets are web pages. Guide reading contents can become much more lively and vivacious. As the web pages not only can include plane contents. but also can dynamically be linked to related contents. They also can dynamically present multimedia contents. Most important, web pages can respond guide reading actions triggered by web page events (such as mouse movement events. linking events generated by click of a button key and hyperlink. etc.). Thus guide reading contents are not only limited to plain speaking in video or audio fashion but also include dynamic guide reading actions. And the guide reading actions may be realistically presented by triggered web page events.

Therefore, utilizing web pages as content carriers, and networks as publishing channels, and web page events as guide reading contents can achieve online publishing objectives, and, hence, will create a new direction for traditional publishing industry.

### SUMMARY OF THE INVENTION

The object of the invention is to provide a digital information guide reading system and method that combine the Internet and web page properties to enhance guide reading function and capability.

According to one embodiment of the invention, the digital content guide reading method includes at least the following steps:
1. Presenting an article content in an article window located in a container at a user end. The article content is a digitized document responding to an event. The carrier of article content is web pages, and the container is a web page browser.
2. Loading a guide reading content in the article window. The guide reading content includes at least a guide reading event trace for linking an intent guide reading portion in the article content. When the guide reading event trace is the intent guide reading portion, the required guide reading actions in the container or in the article contents will trigger guide reading event trace comprising the information related to all of the guide reading events.
3. Loading a guide reading broadcasting mechanism in the article window. The guide reading broadcasting mechanism includes at least an event trigger mechanism.
4. The event trigger mechanism of the guide reading broadcasting mechanism can, based on a user's designated intent guide reading portion in the article content, search and retrieve guide reading event traces which are linked to the intent guide reading portion, and trigger the guide reading event traces according to event triggering time sequences in the article window. The event trigger mechanism further includes function to continue. pause or resume broadcasting of the guide reading event traces.

The container in the method set forth above may be stored in a computer readable storage medium. The container may be a software program (such as web page browser, electronic book reading software, computer assisted instructions software, document processing software, spreadsheet (or trial balance) software, database software, presentation softmare, or electronic mail software and the like). The method further includes remark contents linked to keywords of the article content loading from a remark window located in the container at the user end to allow users to inquire the remarks of the keywords of the article content. Or the remark window may be loaded with remark contents linked to a plurality of independent units separating from the article content to allow users to inquire the remarks related to the independent units of the article.

The guide reading content further includes at least a guide reading audio data linked to an intent guide reading portion of the article content. And the guide reading broadcasting mechanism further includes an audio broadcasting mechanism which may be located in the article window to couple with an event triggering mechanism to synchronously broadcast the guide reading audio data of the intent guide reading portion while triggering guide reading event traces of an intent guide reading portion.

In addition, the method set forth above further includes loading a guide reading recording mechanism in the article window. The guide reading recording mechanism includes at least an event recording mechanism for recording guide reading event traces. The guide reading recording mechanism also includes an audio recording mechanism to allow users to synchronously record guide reading audio data while recording guide reading event traces.

According to an embodiment of the invention, a server is set up to provide online guide reading web page contents. The server includes at least: a central processing unit, a communication interface, a memory and a guide reading broadcasting mechanism. The communication interface is for connecting a communication link. The memory stores at least a digitized article content capable of responding to events and a guide reading content. The article content may be displayed on an article web page window in a container at a user end through the communication interface via communication link for users to read. The guide reading content includes at least a guide reading event trace which may be loaded in the article web page window through the communication interface via communication link. The guide reading event trace is linked to an intent guide reading web page object in the article web page. When the guide reading event trace is the intent guide reading web page object, the required guide reading actions in the container or in the article web page will trigger guide reading event trace comprising the information related to all of the guide reading events.

The guide reading broadcasting mechanism may be loaded in the article web page window through the communication interface via communication link for broadcasting the guide reading content in the article web page window. The guide reading broadcasting mechanism includes at least an event triggering mechanism which may be based on an intent guide reading web page object designated by users on the article web page to search and retrieve from the memory guide reading event traces linked to the intent guide reading web page object, and trigger the guide reading event traces according to event triggering time sequences in the article web page window. The event triggering mechanism further includes function to continue, pause or resume broadcasting the guide reading event traces.

The memory set forth above further includes remark contents linking keywords of the article content. The remark contents may be linked through the communication interface via communication link to allow users to inquire keyword remarks in the article content. Or the memory set forth above may further include remark contents linked to a plurality of independent units separated from the article content. The remark contents may be linked through the communication interface via communication link to allow users to inquire the remarks related to the independent units of the article.

The guide reading content further includes at least a guide reading audio data linking an intent guide reading web page object in the article web page. The guide reading audio data may be loaded through the communication interface via communication link into the article web page window. And the guide reading broadcasting mechanism further includes an audio broadcasting mechanism which may be loaded through the communication interface via communication link into the article web page window. The audio broadcasting mechanism in the article web page window may couple with an event trigger mechanism to synchronously broadcast the guide reading audio data of the intent guide reading web page object while triggering a guide reading event trace of the intent guide reading web page object.

Moreover, the server mentioned above further includes at least a guide reading recording mechanism to allow the server end to record guide reading contents, or through the communication interface via communication link load into the article web page window to allow users to record guide reading contents of an intent guide reading web page object. The guide reading contents recorded by the users and identification data of the intent guide reading web page object and users' identification data may be transferred back and stored in the server, or stored at the user end, and set the storing path to the guide reading broadcasting mechanism in the article web page window. The guide reading recording mechanism includes at least an event recording mechanism to allow the server end to record guide reading event traces, or through the communication interface via communication link load into the article web page window to allow users to record guide reading event traces.

The guide reading recording mechanism further includes an audio recording mechanism to allow the server end to synchronously record guide reading audio data while recording guide reading event traces, or through the communication interface via communication link load into the article web page window to allow users to synchronously record guide reading audio data while recording guide reading event traces.

According to an embodiment of the invention, the digital content guide reading apparatus includes at least: a central processing unit, a display device, a user interface, a memory and a guide reading broadcasting mechanism. The memory stores at least a digitized article content capable of responding to events and a guide reading content. The article content may be displayed on an article window of a container in the display device for users to read. The guide reading content includes at least a guide reading event trace which may be linked to an intent guide reading portion of the article content. When the guide reading event trace is the intent guide reading portion, required guide reading actions are located in the container or event traces composed of all guide reading related information triggered by the article content. The guide reading broadcasting mechanism is used to broadcast the guide reading content in the article window and includes at least an event trigger mechanism which may be based on an intent guide reading portion designated by users in the article content to search and retrieve from the memory guide reading event traces linked to the intent guide reading portion, and trigger the guide reading traces according to event triggering time sequences in the article window. The event trigger mechanism further includes function to continue, pause or resume broadcasting guide reading event traces.

The apparatus set forth above includes an electronic book reading device or a Personal Digital Assistant (PDA). The memory further includes a remark content linked to keywords of the article content to allow users to inquire the remarks of the keywords of the article content. Or the memory may also include a remark content linked to a plurality of independent units separated from the article content to allow users to inquire the remarks related to the independent units of the article.

Moreover, the guide reading content set forth above further includes at least a guide reading audio data linked to an intent guide reading portion of the article content. And the guide reading broadcasting mechanism further includes an audio broadcasting mechanism which may be located in the article window to couple with an event triggering mechanism to synchronously broadcast the guide reading audio data of the intent guide reading portion while triggering a guide reading event trace of the intent guide reading portion.

In addition, the apparatus set forth above further includes a guide reading recording mechanism for recording the guide reading content. Furthermore, the apparatus further includes a communication interface connecting to a communication link for loading the guide reading recording mechanism, guide reading broadcasting mechanism and contents of the memory through the communication interface via communication link. The guide reading recording mechanism includes at least an event recording mechanism for recording guide reading event traces. The guide reading recording mechanism also includes an audio recording mechanism to allow users to synchronously record guide reading audio data while recording the guide reading event traces.

The foregoing, as well as additional objects, features and advantages of the invention will be more readily apparent from the following detailed description, which proceeds with reference to the accompanying drawings.

### BRIEF DESCRIPTION OF THE DRAWINGS

FIG. 1 a schematic block diagram of an environment of the invention.
FIG. 2 is an architecture block diagram of a preferred embodiment of the digital information guide reading system of the invention.
FIG. 3 is a process flow chart of an embodiment for recording guide reading contents according to the method of the invention.
FIG. 4 is a process flow chart of an embodiment for broadcasting guide reading contents according to the method of the invention.
FIG. 5 is a process flow chart of an embodiment of a method for digital information guide reading according to the invention.

### DESCRIPTION OF THE PREFERRED EMBODIMENTS

The invention aims to provide techniques for recording and broadcasting web page guide reading contents. As the web page contents can be dynamically presented and their container (browser) can respond to events, in processes of dynamically reading the web page contents, the triggered events can sequentially trigger and present original reading conditions. Hence in addition to video and audio materials, web page guide reading contents can also include guide reading actions on the web page or event traces triggered in the container during guide reading processes. During guide reading processes, video and audio output may be broadcast to lead readers to read web page contents and the readers can follow video and audio directions to consecutively trigger corresponding events. Readers may also temporarily stop the broadcasting of the guide reading contents and directly browse the dynamic contents provided by the web page.

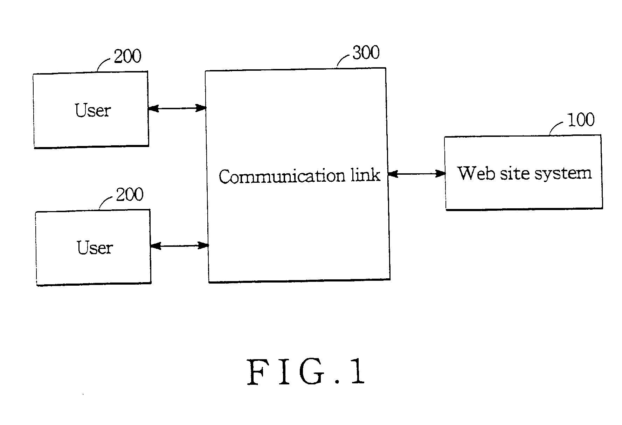

The invention may be adopted on web site systems to provide guide reading function. The web site system provides article contents, remark contents, guide reading contents and guide reading broadcasting mechanism to a plurality of users for online reading of web page contents that have guide reading function. I.E. the web site system can through networks presents an article content on an article web page window at an user end. and load a guide reading content and a guide reading broadcasting mechanism. And the user can utilize the guide reading broadcasting mechanism to broadcast the guide reading content to get help when reading the article content, and to do online real time inquiry for the remarks of the article content. Referring to FIG. 1 for an environment of the invention, there are a plurality of users 200 who may logon a web site system 100 through a communication link (such as a network) 300 to do online reading on those guide reading function enabled contents.

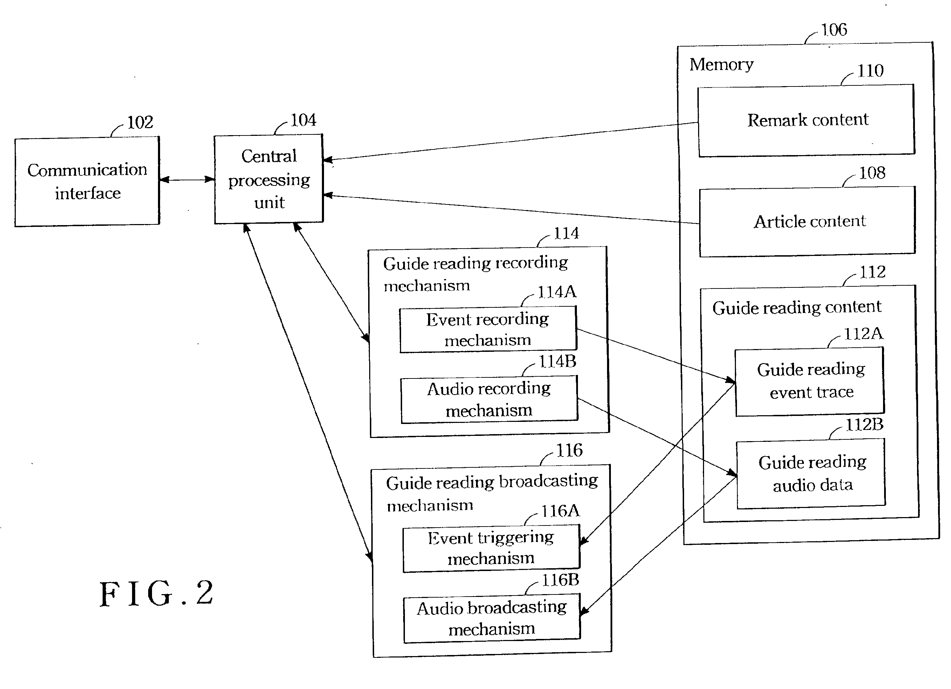

Referring to FIG. 2 for a system architecture of an embodiment of the invention, the web site system 100 includes at least a communication interface 102, a central processing unit 104, a memory 106, a guide reading recording mechanism 114 and a guide reading broadcasting mechanism 116. The memory 106 stores at least an article content 108, a remark content 110 and a guide reading content 112. The guide reading content 112 includes at least a guide reading audio data 112B and a guide reading event trace 112A. The guide reading recording mechanism 114 includes at least an audio recording mechanism 114B and an event recording mechanism 114A. The guide reading broadcasting mechanism 116 includes at least an audio broadcasting mechanism 116B and an event triggering mechanism 116A.

The article content 108 is a digitized document capable of responding to events. The article content 108 may be divided in a plurality of article independent units (such as article paragraphs. sentences or pictures) for storing separately. The remark content 110 may also be divided in a plurality of remark independent units and stored separately. The article independent units and keywords contained therein and the remark independent units are linked to allow users to inquire the remarks for the article independent units and keywords contained therein when reading the article content 108. The remark independent units and keywords contained therein may also be linked to the remark independent units to allow users to inquire the remarks of the remark independent units and keywords when reading the remark content 110. The guide reading audio data 112B are guide reading (browsing and instructions) audio data for the article content 108 and remark content 110. The guide reading event trace 112A is an event trace composed of all guide reading event related information triggered by guide reading actions in the web page or its container (remark web page or its container).

The guide reading recording mechanism 114 is for recording the guide reading content 112. The audio recording mechanism 114B is for recording the guide reading audio data 112B. The event recording mechanism 114A is for recording the guide reading event trace 112A. In addition, the guide reading broadcasting mechanism 116 is for broadcasting the guide reading content 112. The audio broadcasting mechanism 116B is for broadcasting the guide reading audio data 112B and the event triggering mechanism 116A is coupled with the audio broadcasting mechanism 116B to synchronously trigger the guide reading event trace 112A.

The communication interface 102 connects a communication link for transmitting messages to or receiving messages from users. The central processing unit 104 is coupled with the communication interface 102, memory 106, guide reading recording mechanism 114 and guide reading broadcasting mechanism 116 to process users' requesting messages transmitted through the communication interface 102, and based on this transmits the article content 108 and remark content 110 to users' locations, and downloads the guide reading recording mechanism 114 or guide reading broadcasting mechanism 116 to users' locations, and transmits the guide reading content 112 to users' locations.

Whether to retain or discard the events recorded by the event recording mechanism 114A depends on if they are required for guide reading. For instance, the event of moving the cursor to indicate guide reading positions, event of reversing character color. event of inquiring remark content 110, event of closing remark window, event of linking superlink object, and the like are events should be recorded. Regard the related information of those events that should be recorded, in terms of web page event, some web page objects have specific event processing procedures. For instance. a multimedia broadcasting button key (btnObj) may be used to broadcast the multimedia objects. When users click the button key once. the contents of the multimedia objects are started to broadcast. Hence the related information of the web page event should be recorded are: identification data of the button key, even type (onclick) and triggering time. However there is no need to record processing procedures for the event. As when broadcasting the guide reading content 112, the event triggerng mechanism moves. at the triggering time, the mouse to the button key and click or set the button key to be clicked (btnObj.click( )), or generate click pseudo events (pseudo events, btnObj_onclick), then the multimedia start to broadcast automatically. However some web page events do not have preset web page event processing procedures, and event processing procedures cannot be activated through triggering the web page event, then the event processing procedures must be recorded. But there is no need to record event type, such as to reverse color for a keyword in an object of an article web page. The recording web page event related information are: keyword contents, identification data of the object and triggering time, and event type is none. Contents of the processing procedures are procedures required to reverse the color for the keyword in the object so that when the guide reading content 112 is broadcast, the event triggering mechanism reverses the color of the keyword in the object at the triggering time. Of course, the recording event is not limited to web page events, container events (container for holding the web page) may also be recorded. Regard the event of reversing the color of a keyword in an object on an article web page set forth above, mouse event at the triggering time may be recorded, i.e. record mouse position and action (dragging or double click) at the triggering time. When the guide reading content 112 is broadcast, event triggering mechanism drives the mouse to the selected location to proceed actions of dragging or double click at the triggering time to reverse the color of the keyword in the object.

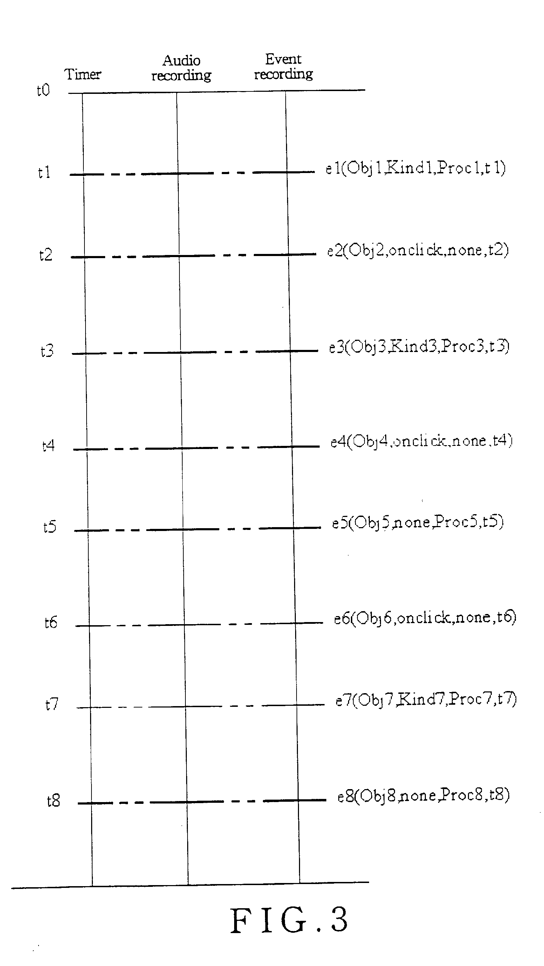

The guide reading recording mechanism 114 includes, besides the event recording mechanism 114A. the audio recording mechanism 114B. Referring to FIG. 3 for a process flow of an embodiment of the invention for recording the guide reading content 112 (triggering events on an article web page are taken as the recording event example):
1. Time prior to t0: An article content consists of a plurality of article independent units is loaded into an article web page window, and a timer is installed in the article web page.
2. Time t0: The timer set in the article web page is activated. A guide reader starts to read the guide reading article web page content. The audio recording mechanism starts to record voice speech of the guide reader, and the event recording mechanism starts to record web page related information (identification data of the event related to web page objects, event type, event processing procedures and event triggering time) triggered on the article web page by the guide reader's guide reading actions on a guide reading event trace (e-Trace).
3. Time t1: The audio recording mechanism continues to record voice speech of the guide reader. The article web page window triggers a first web page event. The event recording mechanism records a web page object (Obj1), event type (Kind1), processing procedures (Procl), and triggering time (t1) related to the event on a first element e1 of the guide reading event trace e-Trace.
4. Time t2: The audio recording mechanism continues to record voice speech of the guide reader. A multimedia object in the article web page responds to guide reading requirements and has the broadcasting button key depressed to start broadcasting. The event recording mechanism records identification data (Obj2), event type (onclick), processing procedures (none), triggering time (t2) of the button key on a second element e2 of the guide reading event trace e-Trace. As the broadcasting button key is included in the original processing procedures, only the event type is recorded as onclick. When broadcasting time reaches t2, the mouse is moved to Obj2 button key and a click is performed. or an Obj2.click ( ) is set, or a pseudo event Obj2_onclick is generated.
5. Time t3: The audio recording mechanism continues to record voice speech of the guide reader The article web page window triggers a third web page event. The event recording mechanism records a web page object (Obj3), event type (Kind3), processing procedures (Proc3), and triggering time (t3) related to the event on a third element e3 of the guide reading event trace e-Trace.
6. Time t4: The audio recording mechanism continues to record voice speech of the guide reader. The multimedia object in the step 4 has a stop broadcasting button key depressed to stop broadcasting in response to the requirement of the guide reader. The event recording mechanism records the identification data (Obj4), event type (onclick), processing procedures (none), and triggering time (t4) of the stop broadcasting button key on a fourth element e4 of the guide reading event trace e-Trace.
7. Time t5: The audio recording mechanism continues to record voice speech of the guide reader. The guide reader in response to guide reading requirements selects (or reverses color of) a keyword on the article web page window to inquire remark content of the keyword. The event recording mechanism records the keyword and object identification data (Obj5), event type (none), processing procedures (Proc5), and triggering time (t5) of the keyword on a fifth element e5 of the guide reading event trace e-Trace. As the event of reversing keyword color on the article web page does not have preset processing procedures, the content of the Proc5 is: Reverse the color of the keyword in Obj5. However the event type is not recorded. When broadcasting the guide reading content at time t5, the color of the keyword is reversed. The mouse event (mouse location and dragging or double click) at the triggering time may also be recorded so that when the guide reading content is broadcast at time t5, the mouse is driven on that location to perform dragging or double click actions to reverse the color of the keyword in the object.
8. Time t6: The audio recording mechanism continues to record voice speech of the guide reader. The guide reader in response to guide reading requirements depresses inquiry button key to inquire the remark content of the keyword selected (or reversed color) at step 7. The event recording mechanism records the identification data (Obj6), event type (onclick), processing procedures (none), and triggering time (t6) of the inquiry button key on a sixth element e6 of the guide reading event trace e-Trace. The onclick event of the Obj6 has preset processing procedures which are: retrieve the keyword of the reversed color on the article web page and transmit to the server which requested the inquiry remark. The obtained remark content is presented on the remark web page window in a smaller format.
9. Time t7: The remark web page window has been focused; the audio recording mechanism continues to record voice speech of the guide reader; the guide reader in response to guide reading requirements triggers a web page event on the remark web page window. The event recording mechanism records a web page object (Obj7), event type (kind7), processing procedures (Proc7), and triggering time (t7) related to the web page event on a seventh element e7 of the guide reading event trace e-Trace.
10.Time t8: The audio recording mechanism continues to record voice speech of the guide reader. The guide reader closes the remark web page window. The event recording mechanism records the identification data of the remark web page window (Obj8), event type (none), processing procedures (Proc8: required procedures for closing the remark web page window), and triggering time (t8) on an eighth element e8 of the guide reading event trace e-Trace. There is no need to record the event type as long as the remark web page window can be closed at time t8. The mouse event (mouse location and click actions) at the triggering time may also be recorded so that when the guide reading content is broadcast at time t8. the mouse is driven to that location to perform clicking action for closing the remark web page window.
11. Time after t8: The article web page window has been focused again: the audio recording mechanism and event recording mechanism continue the steps set forth above to record guide reading contents.

The steps 7 and 8 set forth above depict guide reader's actions for inquiring remark contents on the article web page. In fact, inquiry of related remarks of the remark contents may also be done on the remark web page window. In addition, the guide reading content does not necessarily be full text guide reading of the article content. Partial section of certain web page objects (such as selected paragraphs or picture objects) may also be recorded in the guide reading content as long as the guide reading content and targets for serving guide reading are set to link. Moreover, guide reading content may be recorded in the server end and downloaded into a user end, or download the guide reading recording mechanism into the user end to allow the user to do self recording. The recorded guide reading content may be transferred back to the server for storing or stored in the user end. When storing in the user end. performing guide reading may be done by designating storage paths of the guide reading content to the guide reading broadcasting mechanism.

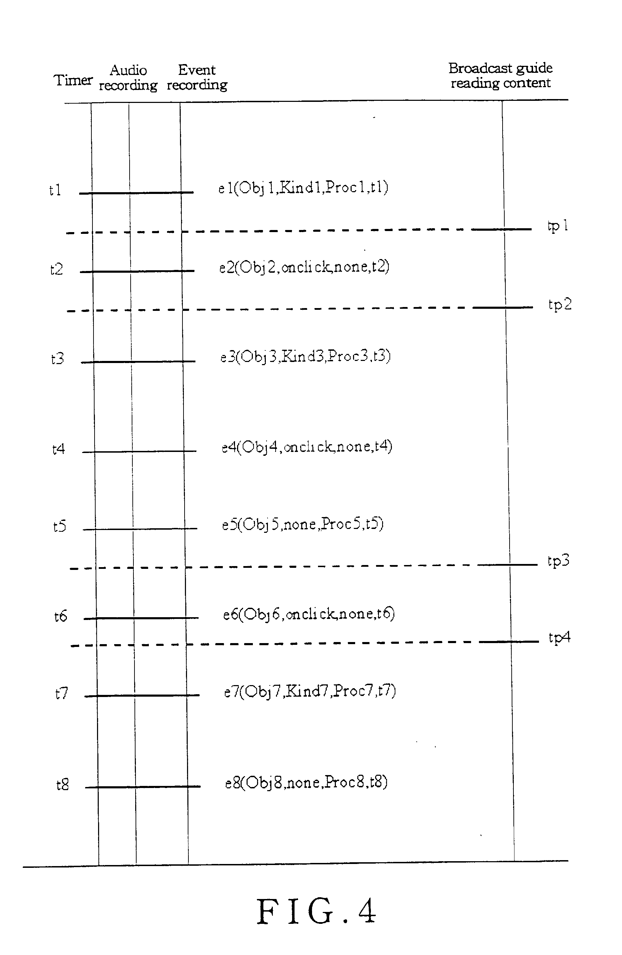

The guide reading broadcasting mechanism 116, besides including the event triggering nechanism 116A, also includes the audio broadcasting mechanism 116B. The audio broadcasting mechanism 116B is for broadcasting the guide reading audio data 112B. The event triggering mechanism 116A is for synchronously triggering the guide reading event trace 112A. The following is an embodiment of the invention for the guide reading broadcasting mechanism 116 to broadcast the guide reading content 112 (referring to FIG. 4). The processing steps include:
1. Prior to time t0: An article web page window at a user end shows an article content and a guide reading content and a guide reading broadcasting mechanism are loaded. The guide reading content includes a guide reading audio data and a guide reading event trace. The guide reading broadcasting mechanism includes an audio broadcasting mechanism and an event triggering mechanism. There is a timer located in the web page.
2. The user requests to broadcast the entire guide reading content, and the timer is activated:
   a. At time t0: The audio broadcasting mechanism starts from the beginning time to broadcast entire guide reading audio data and continues broadcasting at the following time frames.
   b. At time t1: The event triggering mechanism triggers a first trace e1 in the event trace e-Trace, i.e. an article web page object Obj1 generates an event Kind1 and through a Proc1 to respond the effect of the event.
   c. At time t2: The event triggering mechanism triggers a second trace e2, and a multimedia object on the article web page starts broadcasting. The broadcasting button key Obj2 generates an onclick event and contents of the multimedia object are broadcast.
   d. At time t3: The event triggering mechanism triggers a third trace e3, an article web page object Obj3 generates an event Kind3 and through a Proc3 to respond the effect of the event.
   e. At time t4: The event triggering mechanism triggers a fourth trace e4. The multimedia object at step c stops broadcasting. A stop broadcasting button key Obj4 generates an onclick event to stop the broadcasting of the multimedia object.
   f. At time t5: The event triggering mechanism triggers a fifth trace e5 for reversing the color of a keyword in an object Obj5 in an article page through a procedure Proc5. If the recording content of the fifth trace e5 is a mouse event (mouse location and mouse dragging or double click actions), then drive the mouse to that location for dragging or double click actions to reverse the color of the keyword in the object.
   g. At time t6: The event triggering mechanism triggers a sixth trace e6. An inquiry button key Obj6 in the article Web page generates an onclick event. The onclick event of the Obj6 has a preset processing procedures: fetch the character string on the article web page that has the color reversed and transfer the reversed character string to the server requesting for inquiry of remarks. The obtained remark content is presented in a smaller remark web page window at the user end.
   h. At time t7: The event triggering mechanism triggers a seventh trace e7. The remark web page has an object Obj7 generating an event Kind7 and through a Proc7 to respond the effect of the event.
   i. At time t8: The event triggering mechanism triggers an eighth trace e8. The remark web page has an object Obj8 which is closed through a Proc8. If recording content of the eighth trace e8 is a mouse event (mouse location and mouse click actions), then drive the mouse to that location to do click actions to close the remark web page window.
   j. After time t8: The event triggering mechanism continuously triggers e-Trace. and the audio broadcasting mechanism also continuously broadcasts guide reading audio data.
3. When the user requests to start broadcasting guide reading content at time tp1 (where tp1 > t1), the timer starts counting time at time tp1, and the audio broadcasting mechanism starts broadcasting at time tp1. As tp1 > t1, the event triggering mechanism does not trigger e1, but consecutively triggers the rest of e-Trace members after e2 (i.e. e2, e3, .... e8).
4. When the user requests to start broadcasting guide reading content at time tp2 (where tp2 > t2), the timer starts counting time at time tp2, and the audio broadcasting mechanism starts broadcasting at time tp2. As tp2 > t2, and at time tp2 a multimedia object is broadcast. Hence the multimedia object starts broadcasting at time tp2. Thereafter, the event triggering mechanism consecutively triggers e-Trace members after e3 (i.e. e3, e4, .... e8).
5. When the user requests to start broadcasting guide reading content at time tp3 (where tp3 > t5). the timer starts counting time at time tp3, and the audio broadcasting mechanism starts broadcasting at time tp3. As tp3 > t5, and e5 is an event for reversing the color of a keyword in the article web page. And e6 is an event for inquiring remarks. Hence the event triggering mechanism will still trigger e5 event, thereafter, triggers the e6 event. Triggering e5 event is to provide processing procedures for the e6 event for fetching the reversed color keyword on the article web page. Thereafter, the event triggering mechanism consecutively triggers e-Trace members after e7 (i.e. e7 and e8).
6. When the user requests to start broadcasting guide reading content at time tp4 (where tp4 > t6), the timer starts counting time at time tp4, and the audio broadcasting mechanism starts broadcasting at time tp4. As tp4 > t6. and e6 is an event for inquiry remarks, and the remark web page window has been focused, the event triggering mechanism triggers e7 event on the remark web page window. Thereafter, the event triggering mechanism triggers e8 event in e-Trace.

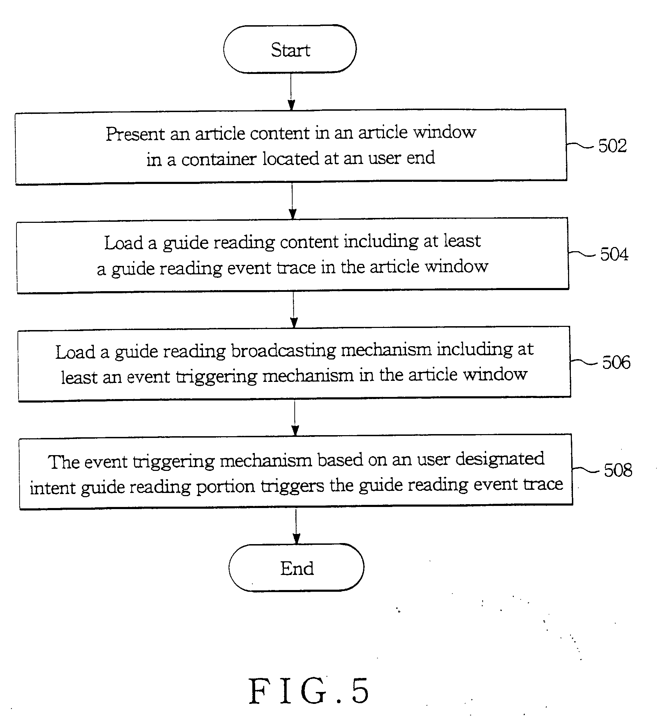

Referring to FIG. 5 for an embodiment of the method of the invention for guide reading digital contents, the steps include:
1. Presenting an article content in an article window in a container at a user end. The article content may be a digitized document responding to an event. If the carrier of the article content is a web page. the container is a web page browser (step 502).
2. Loading a guide reading content in the article window. The guide reading content includes at least a guide reading event trace which is linked to an intent guide reading portion of the article content. When the guide reading event trace is the intent guide reading portion, the required guide reading actions in the container or in the article content will trigger guide reading event trace comprising the information related to all of the guide reading events. (step 504).
3. Loading a guide reading broadcasting mechanism in the article window. The guide reading broadcasting mechanism includes at least an event triggering mechanism (step 506).
4. The event triggering mechanism in the guide reading broadcasting mechanism can search and retrieve a guide reading event trace linked to the intent guide reading portion based on an intent guide reading portion of the article content designated by the user, and according to sequences of event triggering time in the article window triggers the guide reading event trace. The event trigger mechanism further includes function to continue, pause or resume broadcasting of guide reading event traces (step 508).

The container of the method set forth above may be stored in a computer readable storage medium. The container may be a software program (such as a web page browser, electronic book reading software, computer assisted instructions software, document processing software, spreadsheet (trail balance) software, database software, presentation software, or electronic mail software and the like). The method further includes loading a remark content in the user end remark window to link keywords in the article content to allow users to inquire remarks of the keywords in the article content, or loading a remark content in the remark window to link a plurality of article independent units separated from the article content to allow users to inquire remarks related to the article independent units.

The guide reading content further includes at least a guide reading audio data linked to an intent guide reading portion of the article content. And the guide reading broadcasting mechanism further includes an audio broadcasting mechanism which may be located in the article window to couple with the event triggering mechanism for synchronously broadcasting the guide reading audio data of the intent guide reading portion while the event triggering mechanism triggers guide reading event traces of the intent guide reading portion.

The method set forth above further includes loading a guide reading recording mechanism in the article window. The guide reading recording mechanism includes at least an event recording mechanism for recording guide reading event traces. The guide reading recording mechanism also includes an audio recording mechanism which allows users to record guide reading event traces and synchronously record guide reading audio data.

The techniques of the invention may also be transferred to Computer Assisted Instructions (CAI) optical disks now available on the market. Teaching materials and data stored in CAI optical disks may be transformed to guide reading contents and guide reading broadcasting mechanism so that users can use the guide reading broadcasting mechanism to broadcast the guide reading contents of the teaching materials to accelerate learning speed and improve learning quality. Furthermore, the techniques of the invention may also be transferred to CAI software. The CAI software with built-in guide reading broadcasting mechanism may download teaching materials and guide reading contents of the teaching materials so that the CAI software can also broadcast the guide reading content. The CAI optical disks or software may also include built-in guide reading recording mechanism for recording users' guide reading contents based on users' requirements in addition to broadcasting guide reading contents.

The general office-software (document processing software, spreadsheet (trial balance) software, database software, presentation software, or electronic mail software and the like) or electronic book reading software may also adopt the techniques provided by the invention. As general office software or electronic book reading software can download digital data, the built-in guide reading broadcasting mechanism can also download guide reading contents. Then digital data may be downloaded for guide reading to improve reading effect. Of course, if general office software or electronic book reading software further has built-in guide reading recording mechanism, users may record digital data guide reading content, and then users may exchange not only the original digital files, but also files of remarks and commentaries for the original files or directory files to aid reading.

By the same token, hardware for reading digital data such as electronic book readers or PDAs may also adopt the techniques of the invention to present data more effectively and to enhance users' reading quality. If the hardware has built-in guide reading broadcasting mechanism, digital data and digitized guide reading contents may be downloaded to proceed digital reading coupling with the guide reading mechanism to improve reading quality. Users also may record the entire guide reading content or record dynamic remarks targeting selected objects.

In addition, the techniques of the invention may also be transferred to network browser software. For instance, the browser software may have built-in guide reading broadcasting mechanism (or including guide reading recording mechanism) to download guide reading contents in web pages and web page contents.

While the preferred embodiments of the inventions have been set forth for purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. A method for guide reading digital contents, comprising at least the steps of:
presenting an article content in an article window of a container located at a user end, the article content being a digitized document responding to an event;
loading a guide reading content into the article window, the guide reading content including at least a guide reading event trace, the guide reading event trace being linked to an intent guide reading portion of the article content, and when guide reading the intent guide reading portion, the required guide reading actions in the container or in the article contents will trigger guide reading event trace comprising the information related to all of the guide reading events: and
loading a guide reading broadcasting mechanism into the article window, the guide reading broadcasting mechanism including at least an event triggering mechanism:
wherein the event triggering mechanism of the guide reading broadcasting mechanism based on an intent guide reading portion designated by users in the article content searches and retrieves guide reading event traces linked to the intent guide reading portion, and triggers the guide reading event traces according to event triggering time sequences in the article window.

2. The method of claim 1, wherein the container is stored in a computer readable storage medium.

3. The method of claim 1, wherein the container is a software program.

4. The method of claim 1, wherein the guide reading content further includes at least a guide reading audio data linked to the intent guide reading portion of the article content, and the guide reading broadcasting mechanism further includes an audio broadcasting mechanism located in the article window to couple with the event triggering mechanism to trigger the guide reading event traces of the intent guide reading portion and to synchronously broadcast the guide reading audio data.

5. The method of claim 1, further including loading a guide reading recording mechanism in the article window, the guide reading recording mechanism including at least an event recording mechanism for recording the guide reading event traces.

6. The method of claim 2, wherein the computer readable storage medium includes computer assisted instructions (CAI) optical disks.

7. The method of claim 3, wherein the software program includes an electronic book reading software program or a computer assisted instructions software program.

8. The method of claim 3, wherein the software program being selected from the group consisting of a Web page browser, a document processing software, a spreadsheet (or trial balance) software, a database software, a presentation software, or an electronic mail software.

9. The method of claim 5, wherein the guide reading recording mechanism further includes an audio recording mechanism to allow users synchronously recording guide reading audio data while recording the guide reading event traces.

10. A server for providing online guide reading web page contents, comprising at least:
a central processing unit:
a communication interface for connecting a communication link;
a memory: for storing at least an article content being a digitized document responding to an event and a guide reading content, the article content being displayable on an article web page window contained in a container located at a user end through the communication interface via the communication link for users reading, the guide reading content including at least a guide reading event trace which is loadable into the article web page window of the container at the user end through the communication interface via the communication link, the guide reading event trace being linked to an intent guide reading web page object in the article web page. and when guide reading the intent guide reading portion, the required guide reading actions in the container or in the article contents will trigger guide reading event trace comprising the information related to all of the guide reading events; and
a guide reading broadcasting mechanism being loaded into the article web page window contained in the container located at the user end through the communication interface via the communication link for broadcasting the guide reading content in the article web page window, and including at least an event triggering mechanism which is based on an intent guide reading web page object designated by users in the article web page searches and retrieves from the memory guide reading event traces which are linked to the intent guide reading web page object, and triggers the guide reading event traces according to event triggering time sequences in the article web page window.

11. The sever of claim 10, wherein the guide reading content further includes at least a guide reading audio data linked to the intent guide reading web page object in the article web page, the guide reading audio data being loadable into the article web page window at the user end through the communication interface via the communication link, and the guide reading broadcasting mechanism further including an audio broadcasting mechanism loadable into the article web page window at the user end through the communication interface via the communication link, the audio broadcasting mechanism being located in the article web page window to couple with the event triggering mechanism to trigger the guide reading event trace of the intent guide reading web page object and to synchronously broadcast the guide reading audio data.

12. The server of claim 10 further having a guide reading recording mechanism which includes at least an event recording mechanism to allow the server end to record the guide reading event traces or through the communication interface via a communication link downloading into the article web page window at the user end to allow the user to record the guide reading event traces.

13. The server of claim 10, wherein the guide reading recording mechanism further includes an audio recording mechanism which allows the server end to synchronously record guide reading audio data while recording the guide reading event traces, or through the communication interface via the communication link downloading into the article web page window at the user end to allow the user end to synchronously record the guide reading audio data while recording the guide reading event trace.

14. An apparatus for guide reading digital contents, comprising at least:
a central processing unit;
a display device;
a user interface;
a memory; for storing at least an article content being a digitized document responding to an event and a guide reading content, the article content being displayable on an article window contained in a container located on the display device for users reading, the guide reading content including at least a guide reading event trace which is linked to an intent guide reading portion of the article content. and when guide reading the intent guide reading portion, the required guide reading actions in the container or in the article contents will trigger guide reading event trace comprising the information related to all of the guide reading events; and
a guide reading broadcasting mechanism for broadcasting the guide reading content including at least an event triggering mechanism based on an intent guide reading portion designated by users in the article content searches and retrieves from the memory the guide reading event traces linked to the intent guide reading portion, and triggers the guide reading event traces according to event triggering time sequences in the article window.

15. The apparatus of claim 14, wherein the apparatus includes an electronic book reading device.

16. The apparatus of claim 14, wherein the apparatus includes a Personal Digital Assistant (PDA).

17. The apparatus of claim 14 further includes a communication interface via a communication link for loading the content in the memory.

18. The apparatus of claim 14, wherein the guide reading content further includes at least a guide reading audio data linked to the intent guide reading portion of the article content, and the guide reading broadcasting mechanism further including an audio broadcasting mechanism located in the article window to couple with the event triggering mechanism to trigger guide reading event traces of the intent guide reading portion and to synchronously broadcast the guide reading audio data.

19. The apparatus of claim 14 further including a guide reading recording mechanism which includes at least an event recording mechanism for recording the guide reading event trace.

20. The apparatus of claim 19, wherein the guide reading recording mechanism further includes an audio recording mechanism to allow the user to synchronously record the guide reading audio data while recording the guide reading event trace.
